# EUROPÄISCHE PATENTANMELDUNG

(11) **EP 3 098 265 A1**
(43) Veröffentlichungstag der Anmeldung: **30.11.2016**
(21) Anmeldenummer: 15176025.3
(22) Anmeldetag: 09.07.2015
(51) Int. Cl.: C08L 75/04, C08L 63/00, C09D 175/04

(54) **POLYMERZUBEREITUNG, METALLROHR MIT SCHUTZSCHICHT, DICHTELEMENT UND ZENTRIERVORRICHTUNG**

(30) Priorität: 26.05.2015 RU 2015119870
(71) Anmelder: Zamaleev, Firdaus Usmanovich, 620012 g. Ekaterinburg (RU); Gaysin, Malik Favzavievich, g. Ekaterinburg 620142 (RU)
(72) Erfinder: Zamaleev, Firdaus Usmanovich, 620012 g. Ekaterinburg (RU); Gaysin, Malik Favzavievich, g. Ekaterinburg 620142 (RU)
(74) Vertreter: Jeck, Anton

(57) **Zusammenfassung**

Die Erfindung betrifft eine Polymerzubereitung, die als Schutzschicht, als ein Dichtelement oder ein Abdichtbauteil, als eine Zentriervorrichtung verwendet wird. Die Polymerzubereitung enthält (anteilmäßig): einen Urethanoligomer 60 bis 90, einen Polysulfidoligomer 5 bis 30, einen Härter 7 bis 35, Manganoxid 3 bis 20, Epoxidharz 0,1 bis 30, N,N-Diphenylguanidin 0,05 bis 1, ein Antioxidans 0,05 bis 5 und einen Füllstoff 70 bis 120. Die beanspruchte Polymerzubereitung hat hohe physikalische und mechanische Eigenschaften, hohe Adhäsion auf der Oberfläche und ist verschleißfest, chemisch und temperaturbeständig, einfach in der Verarbeitung und kostengünstig.

## Beschreibung

Die vorliegende Erfindung bezieht sich auf eine Polymerzubereitung und kann als eine Schutzschicht für Metallrohre und/oder Fittings, zur Herstellung von Dichtelementen, Zentriervorrichtungen in der Erdöl- und Gasindustrie verwendet werden, wobei diese Aufzählung keinen Anspruch auf Vollständigkeit erhebt.

Aus dem Stand der Technik ist eine Bautenpolymermischung bekannt, die ein Polysulfidoligomer, hydrophobierte (wasserabweisend gemachte) Kreide, einen Weichmacher, Manganoxid, 2,4,6-Tri-(Dimethylamino-Methyl)Phenol, Polyethylenepolyamine, Glutaraldehyd Anilin, Ruß Π-803, Zinkoxid und siebgroben Kalk (Überkorn) enthält [Patent RU 2322468 C1].

Der Mangel dieser Zubereitung ist eine niedrige Verschleißfestigkeit und eine ungenügende physikalische und mechanische Werkstoffeigenschaft.

Durch das Patent RU 2230081 C1 ist eine Polymerzubereitung bekannt, die Dian-Epoxidharz, einen schwefelhaltigen Modifizierzusatz (ein Polymerlegierungsmittel) und einen Aminhärter enthält.

Der Mangel dieser Zubereitung ist ihre niedrige Verschleißfestigkeit.

Durch das Patent RU 2475509 C1 ist eine Polymerzubereitung bekannt, die oligomeren Urethan-Silikon-Kautschuk, einen Weichmacher, Calciumcarbonat, Titandioxid und/oder Zinkoxid, ein Antioxidans, einen thixotropen Zusatz und ein Feuchtigkeitsentziehungsmittel enthält.

Die Mängel dieser Zubereitung sind eine niedrige Verschleißfestigkeit, eine niedrige physikalische und mechanische Werkstoffeigenschaft und eine zu erwartende beachtliche Schrumpfung.

Durch das Patent RU 2397192 C1 ist eine Polymerzubereitung bekannt, die ein Isocyanat-Vorpolymer und einen Härter enthält.

Die Mängel dieser Zubereitung sind ihre niedrige chemische Stabilität sowie eine hohe Wasserabsorption.

Durch das Patent CN 102746619 ist eine Polymerzubereitung bekannt, die Epoxidharz, Thiokautschuk, Polyurethan, Tonerde (Korund), einen Organozinnkatalysator, Polyetheramine, Arylamin, einen Weichmacher und Siliciumdioxid enthält.

Der Mangel dieser Zubereitung ist eine starke Schrumpfung aufgrund hohen Epoxidharzanteils, obwohl der Füllstoffgehalt hoch ist. Ein weiterer Mangel ist eine niedrige Verschleißfestigkeit wegen der Verwendung des aliphatischen Polyetheramines als Vernetzungsmittels für Polyurethan.

Der nächstkommende Stand der Technik gegenüber der erfindungsgemäßen Polymerzubereitung ist eine Zubereitung, die schwefelhaltiges Polyol mit funktionellen Epoxidgruppen (Produkt der Reaktion zwischen Polysulfidoligomer und Epoxidharz gemäß einer der Ausgestaltungen) und einen Isozyanathärter enthält [US 12/899,805, RU 2013120536].

Diese Zubereitung ist durch eine niedrige Verschleißfestigkeit und eine niedrige physikalische und mechanische Werkstoffeigenschaft aufgrund der Nutzung des Isozyanathärters bemängelt.

In der Erdöl- und Gasindustrie werden Schutzschichten, Dichtelemente, Abdichtbauteile, Zentriervorrichtungen aus Kunststoffen bekanntlich beachtlichen physikalischen und chemischen Einwirkungen ausgesetzt. Um die benötigten Funktionen mit erforderlicher Zuverlässigkeit zu erfüllen, müssen Schutzschichten, Dichtelemente, Abdichtbauteile, Zentriervorrichtungen aus Kunststoffen folgende Eigenschaften haben:
- Beständigkeit gegen verschiedene Chemikalien, Rohöl;
- Verschleiß- und Abriebfestigkeit;
- Beständigkeit gegen Hochtemperatur und -druck;
- eine hohe Haftung an der Unterlagenoberfläche.

Darüber hinaus muss der genannte Kunststoff einfach in der Verarbeitung und kostengünstig sein.

Es ist Aufgabe der Erfindung, Kunststoff zu entwickeln, der alle oben genannten Eigenschaften aufweist.

Der technische Effekt ist eine Polymerzubereitung, die gleichzeitig über eine hohe physikalische und mechanische Eigenschaft und eine hohe Unterlageadhäsion verfügt und verschleißfest, chemisch und temperaturbeständig sowie einfach in der Verarbeitung und kostengünstig ist.

Die gestellte Aufgabe wird durch die Merkmale des Anspruches 1 gelöst.

Die beanspruchte Polymerzubereitung weist ein Polysulfidoligomer, ein Epoxidharz und einen Härter auf und unterscheidet sich gegenüber dem nächstkommenden Stand der Technik dadurch, dass sie zusätzlich ein Urethanoligomer, Manganoxid, N,N-Diphenylguanidin, ein Antioxidans und einen Füllstoff mit folgendem Mengenverhältnis anteilmäßig enthält:

| | |
|---|---|
| Urethanoligomer | 60 - 90, |
| Polysulfidoligomer | 5 - 30, |
| Härter | 7 - 35, |
| Manganoxid | 3 - 20, |
| Epoxidharz | 0,1 - 30, |
| N,N-Diphenylguanidin | 0,05 - 1, |
| Antioxidans | 0,05 - 5, |
| Füllstoff | 70 - 120 |

Die genannten Anteilsbereiche der jeweiligen Zutaten der erfindungsgemäßen Polymerzubereitung wurden versuchsweise festgestellt. Die Eigenschaften der Polymerzubereitung (Tabelle 1) sind innerhalb der angegebenen Bereiche für die meisten Anwendungen in der Erdöl- und Gasindustrie geeignet. Die von den Erfindern durchgeführten Feldversuche und Erprobungen der aus der beanspruchten Polymerzubereitung gefertigten Erzeugnisse im Bohr- oder Förderfeld haben den beschriebenen technischen Effekt nachgewiesen.

**Tabelle 1 - Technische Kenndaten der Polymerzubereitung**

| Eigenschaft | Messeinheit | Prüfnorm | Kennwerte |
|---|---|---|---|
| Zugfestigkeit | MPa | GOST 270-75 | 48±3 |
| Metalladhäsion | MPa | GOST 15140-78 | 30±3 |
| Verschleißfestigkeit | mm³ | ISO 4649 | 50±5 |
| Betriebstemperaturbereich | °C | GOST 21341-75, GOST 16782-92 | -70... +150 |
| Chemische Beständigkeit | - | GOST 12020-72 NaCl, HCl, HNO₃, Rohöl (80°C) | Beständigkeitsbewertung - gut |

Nachfolgend wird die funktionelle Aufgabe jeder der Zutaten sowie deren quantitative Begründung beschrieben. Des Weiteren werden Vergleichserzeugnisse betrachtet, die im Wesentlichen ein gleichwertiges bzw. ähnliches Ergebnis bieten.

Die nachfolgend im Anmeldungstext genannten Vergleichszutaten der Polymerzubereitung sind von den Erfindern angeführt, um zu zeigen, wie der technische Effekt nach unterschiedlichen Ausgestaltungen erreicht werden kann. Jedoch wird bei den genannten Vergleichszutaten kein Anspruch auf die Vollständigkeit erhoben und der Schutzumfang der vorliegenden Anmeldung wird hiermit nicht darauf beschränkt. Es ist für einen Fachmann offensichtlich, dass es eine viel längere Liste der vergleichbaren Komponenten gibt, die sowohl von ihrer Natur aus als auch von ihrer funktionellen Bestimmung nach einen gleichen bzw. ähnlichen technischen Effekt sicherstellen können.

Unter dem Begriff "ähnlicher Effekt" wird dabei verstanden, dass die physikalischen und mechanischen Werkstoffeigenschaften der hergestellten Polymerzubereitung bei Verwendung von der sowohl von ihrer Natur aus als auch ihrer funktionellen Bestimmung nach vergleichbaren Komponente innerhalb der zulässigen Messunsicherheit des Wertebereichs für die genannten Eigenschaften der Polymerzubereitung gemäß der vorliegenden Erfindung liegen werden.

Urethanoligomer (Synonyme: Urethan-Prepolymer, Urethan-Vorpolymer) hat an seinen Makromolekülenden Isozyanatgruppen (NCO-Gruppen) in der Menge von 2,9 bis 10,7 %, vorzugsweise aber in der Menge von 3,5 bis 7,5 %. Die Polymerzubereitung verleiht eine Härte, Verschleißfestigkeit und mechanische Eigenschaften. Bei einer Knappheit an dieser Zutat - Anteil unter 60 - nimmt die Verschleißfestigkeit ab und die mechanischen Eigenschaften der Polymerzubereitung verschlechtern sich. Der Überschuss an dieser Komponente - Anteil über 90 - führt zum Aufschäumen der Polymerzubereitung und zu einer Verschlechterung der mechaischen Eigenschaften.

Im Handel sind russische Fabrikate der Marke CKY (SKU) (C 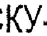 -Πφ 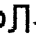 , C 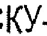 -7- 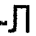 -(SKU-PFL-100, SKU-7-L) und andere), H- 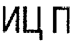 Y-5 (NIZ PU-5), CYP 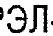 -20φ (SUREL-20F) und andere erhältlich. Zu den ausländischen handelsüblichen Fabrikaten gehören Produkte der Marke TT (Bayer Material Science), Adiprene (Chemtura) und andere.

Polysulfidoligomer (Synonyme: Thiokol) hat eine Molekülmasse von 500 bis 7500 g/mol und einen SH-Gruppen-Anteil zwischen 1 und 9 %, vorzugsweise aber eine Molekülmasse zwischen 800 und 3000 g/mol und einen SH-Gruppen-Anteil zwischen 5 und 8 %. Er sorgt für die Temperatur- und chemische Beständigkeit (Stabilität) der Polymerzubereitung. Der Mangel an dieser Komponente - Anteil unter 5 - führt zu einer niedrigeren chemischen Beständigkeit der Polymerzubereitung. Beim Überschuss an dieser Komponente - Anteil über 30 - kommt eine ungenügende Vernetzung der Zubereitung zustande, die mechanischen Eigenschaften werden benachteiligt. Im Handel sind russische Fabrikate der Marke Thiokol I, II, HB 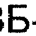 -2 (NVB-2) (Kazan Kunstkautschukfabrik) erhältlich. Marktübliche ausländische Fabrikate sind Thiokol LP (Toray Fine Chemicals), Thioplast (AkzoNobel).

Härter. Als Härter für den Urethanoligomer soll vorzugsweise 4,4'-Methylen-bis-(2-Chloranilin) verwendet werden. Seine Handelsbezeichnungen sind MOKA, Diamet X, Curalon M und Cuamin M. Vergleichserzeugnis ist 3,3'-Dichlor-4,4'-Diaminodiphenylmethan. Die Menge dieser Komponente wird nach einer Formel berechnet und steht im direkten Zusammenhang mit der Menge von Urethanoligomer und dem Anteil der NCO-Gruppen darin. Der Mangel an dieser Komponente verursacht eine unvollständige Vernetzung der Polymerzubereitung, wobei ihre mechanischen Eigenschaften verloren gehen. Der Überschuss an dieser Komponente bedingt eine Verharzung und Versprödung der Polymerzubereitung, oder später wird diese Komponente aus der Polymerzubereitung ausgewaschen, wobei Poren gebildet werden.

Manganoxid MnO₂ (Synonyme: Mangandioxid, Pyrolusit) nach GOST 25823-83 wirkt als Vernetzer des Polysulfidoligomers. Vergleichserzeugnisse: Bleidioxid PbO₂, Zinkoxid ZnO, Kumolhydroperoxid, Kaliumdichromat und andere. Der Mangel bzw. der Überschuss an dieser Zutat führt zu einer unvollständigen Vernetzung des Polysulfidoligomers.

Epoxidharz. Vorzugsweise soll Dian-Epoxidharz 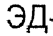 -16 (ED-16), 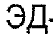 -20 (ED-20) nach GOST 10587-84 verwendet werden. Vergleichserzeugnis: Epoxidharze LR1100, DER 331, CHS-Epoxy 520 u.a.m. mit einem Massenanteil von Epoxidgruppen zwischen 16 und 23 %. Dies sorgt für hohe Haftungswerte der Polymerzubereitung an Metallunterlagen. Beim Mangel an dieser Komponente - Anteil unter 0,1 - wird eine minderwertige Adhäsion der Polymerzubereitung auf den Metalloberflächen beobachtet. Beim Überschuss an dieser Komponente - Anteil über 30 - wird eine starke Schrumpfung der Polymerzubereitung während der Polymerisation beobachtet.

N,N-Diphenylguanidin (Synonyme: Guanid F) nach GOST 40-80. Vergleichserzeugnis: p-Quinone Dioxime, 1,3-Dinitrobenzol. Es handelt sich dabei um einen Vernetzungsbeschleuniger für den Polysulfidoligomer. Ein Mangel an dieser Komponente führt zu einer beachtlichen Verlangsamung der Vernetzung des Polysulfidoligomers. Dementsprechend wird die Lebensdauer der Polymerzubereitung vergrößert. Das erschwert ihre Verarbeitung. Der Überschuss an dieser Komponente - Anteil über 1 - verursacht einen unnötigen Überverbrauch dieser Komponente, was die Eigenschaften der Polymerzubereitung nicht beeinflusst.

Antioxidans ist ein Phenolantioxidans Agidol-2 nach GOST R 55065-2012, (2,2-Methylen bis(4-Methyl-6-tert-Butylphenol). Seine Handelsbezeichnungen sind Antioxidant 2246, Vulkanox BKF, Lovinox 22M46, AOX 22M46. Als Vergleichserzeugnis kann ein beliebiges handelsübliches öllösliches Antioxidans mit einem Arbeitstemperaturbereich bis +130°C gewählt werden, z.B.: Butylhydroxytoluol, Butylhydroxianisol u.a.m. Es wird als Antioxidans und Stabilisator für Polymere eingesetzt. Beim Fehlen bzw. Mangel an dieser Komponente kann thermooxydativer Abbau der Polymerzubereitung beobachtet werden. Der Überschuss an dieser Komponente führt zu einer beschleunigten mikrobiologischen Korrosion (Bioabbau) der Oberfläche der Polymerzubereitung.

Füllstoff. Vorzugsweise soll erfindungsgemäß "Diabasmehl (Synonym: säurefestes Pulver)" verwendet werden. Als "Diabas" werden verschiedene basaltisches Gesteine wie Dolerit ("Mikrogabbro"), Spilit, Pikrit oder Metabasalt bezeichnet. (https://de.wikipedia.org/wiki/Diabas).

Der Polymerzubereitung verleiht er eine hohe chemische Beständigkeit und Verschleißfestigkeit und gilt auch als ein billiger Füllstoff, wodurch der Preis der gebrauchsfertigen Polymerzubereitung vermindert wird. Vergleichserzeugnisse der funktionellen Bestimmung nach sind Diatomeenerde (Synonyme:Diatomit, Kieselgur), Dolomit, Glasfaser, Ruß. Bei Mangel an dieser Komponente - Anteil unter 70 - liegt keine explizite der Eigenschaften der Polymerzubereitung vor. Beim Überschuss - Anteil mehr als 120 - nimmt die Elastizität der Polymerzubereitung drastisch ab, die Polymerzubereitung wird spröde. Ihre Verarbeitung wird aufgrund der Viskositätserhöhung ebenfalls erschwert.

Die Proben der Polymerzubereitung für die Prüfungen werden wie folgt hergestellt.

### Beispiel 1:

Für die Prüfung wird eine Glaskochflasche (Glasrundkolben) oder ein anderer Rührkessel mit einem Rührer, einem Thermometer und einer Evakuierungsableitung verwendet. In die Glaskochflasche bzw. den Rührkessel wird ein eingewogenes Füllgut gesetzt und zwar, anteilmäßig:

| | |
|---|---|
| Urethanoligomer (C 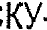 - 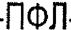 -100 / SKU-PFL-100) | 80, |
| Polysulfidoligomer (Thioplast G-4) | 20, |
| Epoxidharz ( 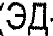 -20 / ED-20) | 3, |
| Füllstoff (Diabasmehl) | 100 und |
| Antioxidans (Agidol-2) | 0,5 |

Der Rührer und die Glaskochflaschenheizung (Rührkesselheizung) werden eingeschaltet. Nach der Verteilung des Antioxidans im Reaktionsgemisch wird das Gemisch bei einer Temperatur von (90±5)°C bei max. P_{oct.} 5 mmHg im Laufe von 8 bis 10 Minuten auf eine Temperatur von (80±5)°C gekühlt und durch das eingewogene Füllgut Manganoxid (MnO₂) mit einem Anteil 5 und eine geschmolzene Mischung von einem Härter (MOKA) und N, N - Diphenylguanidin (Guanid F) unter Rührung ergänzt.

Die geschmolzene Mischung vom Härter (MOKA) mit einem Anteil von 16,2 und N, N - Diphenylguanidin (Guanid F) mit einem Anteil von 0,1 wird in einem 100 cm³ großen Glasbecher zubereitet. Der Glasbecher mit dem eingewogenen Füllgut wird in einem Thermostat bei einer Temperatur von (115±5)°C gehalten, bis die Zutaten völlig geschmolzen sind.

Die geschmolzene Mischung wird dem Reaktionsgemisch über einen der Tuben der Glaskochflasche unter Normaldruck zugeführt. Danach wird dieses Gemisch unter kräftiger Mischung im Laufe von 2 Minuten luftleer gemacht.

Das Vakuum wird abgeblasen. Danach wird das Gemisch in eine mit einem Antiklebstoff vorbestrichene und auf (115±5)°C erwärmte Form gegossen. 6 Stunden später werden die Proben der Form entnommen und in einem freien Zustand bei (115±5)°C im Thermostat weitere 18 Stunden gehalten. Nach der Kühlung auf die Umgebungstemperatur werden die Proben der Polymerzubereitung für weitere Prüfungen zur Verfügung gestellt.

Die beanspruchte Polymerzubereitung wird zu einem Fertigerzeugnis nach folgendem Verfahren verarbeitet:

### Beispiel 2:

Die Zweikomponenten-Gießmaschine mit je einem Rührer in beiden Behältern, einem Behälterheizsystem, einem Evakuierungs- und Dosiersystem wird wie folgt beschickt:
Behälter 1: Urethanoligomer (TT 174 (Bayer Material Science) 90 Anteile, Polysulfidoligomer (HB 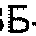 -2 (NVB-2) (Kazan Kunstkautschukfabrik) 5 Anteile, Epoxidharz (LR1100 ("Jana" Saudi Arabia) 20 Anteile, Füllstoff (Dolomit) 80 Anteile und Antioxidans (Vulkanox BKF) 2 Anteile.

Dabei werden Vermengung und Heizung (90±5)°C eingeschaltet. Nach der sorgfältigen ca. 5 Minuten langen Komponentenvermengung wird die Evakuierung im Laufe von 8 bis 10 Min bei P_{oct} max. 5 mmHg eingeschaltet. Die Temperatur der Behälterheizung wird auf (80±5)°C herabgesetzt.
Behälter 2: Manganoxid (MnO₂) 3 Anteile, Härter (Diamet X) 22,7 Anteile, N,N-Diphenylguanidin (Guanid F) 0,05 Anteile
Die Heizung wird auf (115±5)°C geschaltet, bis die Zutaten geschmolzen sind. Danach wird die Vermengung unter gleichzeitiger Evakuierung im Laufe von 8 bis 10 Min bei P_{oct} max. 5 mmHg eingeschaltet.

Die Komponenten beider Behälter werden vermengt und in Formen abgefüllt. Die Formen müssen dabei auf eine Temperatur von (115±5)°C erwärmt sein. Die Polymerisation erfolgt bei (115±5)°C im Laufe von 24 Stunden. Die Erzeugnisse dürfen den Formen 6 Stunden später entnommen werden, und danach erfolgt eine weitere 18 Stunden lange Polymerisation im freien Zustand bei (115±5)°C.

Der Einsatz von automatisierten Anlagen für die Erwärmung, Vermengung und Evakuierung (z.B. Gießmaschine Baule compact C2L, Hersteller Baule, Frankreich) ermöglicht es, eine gleichmäßige Füllstoffverteilung in der Polymermatrix und insgesamt eine hohe Qualität der Komponentenvermengung zu erreichen, was bei Handfertigung nicht möglich ist.

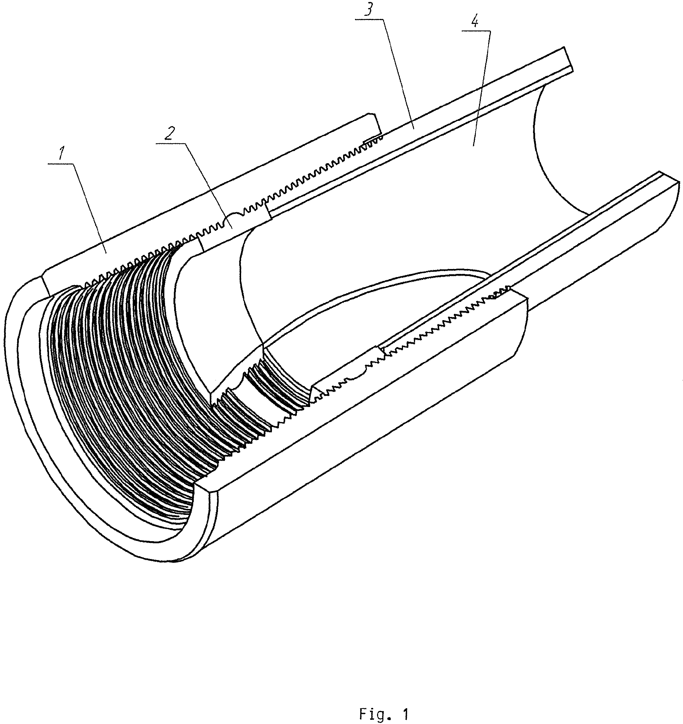

Eine kurze Beschreibung der Zeichnungen ist in der beiliegenden Zeichnung. Es zeigt
Fig. 1 ein Schema der Muffenverbindung

Dabei bezeichnen
1 - eine Muffe; 2 - ein Dichtelement; 3 - ein Metallrohr; 4 - eine Schutzschicht.

Weiter unten sind Ausgestaltungen der Erzeugnisse angeführt, die aus einer beanspruchten Polymerzubereitung gefertigt werden und auch zum Gegenstand der vorliegenden Erfindung gehören.

Eine der Ausgestaltungen der Polymerzubereitung hinsichtlich ihrer Anwendung ist die Herstellung von einer Schutzschicht für die Innen- und Außenoberflächen der Metallrohre.

Für eine Innenschutzschicht: Ein Stempel wird einwärts des Metallrohrs eingefahren, so dass zwischen dem Metallrohr und dem Stempel ein Ringraum entsteht. Der vorher mit einem Antihaftmittel (Antiklebstoff) bestrichener Stempel wird an den Enden des Metallrohrs mittels Verschlüsse befestigt, die gleichzeitig den Stempel zum Metallrohr zentrieren. Ein Verschluss hat einen Einfüllstutzen für die Polymerzubereitung. Ein anderer Verschluss hat ein Ablaßventil, um die Überschussluft abzublasen. Die gesamte zusammengebaute Konstruktion wird in einen Warmofen gesetzt.

Die Polymerzubereitung wird nach dem Verfahren aus Beispiel 2 vorbereitet. Danach wird die Polymerzubereitung über den Einfüllstutzen eingefüllt, bis der Ringraum voll ist. Nach der Polymerisation der Polymerzubereitung (Fahrweisen sind Beispiel 2 zu entnehmen) werden die Verschlüsse entfernt und der wird Stempel herausgefahren. Somit ist das Metallrohr mit einer Innenschutzschicht fertiggestellt.

Für die Außenschutzschicht: Die Herstellung erfolgt ähnlich wie bei der Innenbeschichtung mit einem einzigen Unterschied, dass als Stempel das Metallrohr wirkt, welches in eine vorgefertigte Form eingesetzt wird. Als solche Form kann ein anderes Rohr dienen, dessen Durchmesser größer als der des zu schützenden Rohrs ist. Das Antihaftmittel wird in diesem Fall auf die Innenfläche der Form aufgetragen.

Die Innen- und Außenbeschichtung kann in einem Verfahrensschritt leicht vereinigt werden.

Eine weitere Ausgestaltung und Anwendungsmöglichkeit der Polymerzubereitung ist die Fertigung der Dichtelemente in Muffenverbindungen der Metallrohre (Fig. 1).

Bekanntlich entsteht bei Muffenverbindungen der Metallrohre ein Spalt zwischen den Enden der genannten Rohre. Ist die Innenfläche des Metallrohrs mit einer Schutzschicht versehen, so bleibt der genannte Spalt normalerweise offen. Das trägt dazu bei, dass die geförderte Flüssigkeit in die Gewindeteile des Rohrs und der Muffe eindringt. Späterhin ruft dies Korrosionsschaden des Gewindes und ein Undichtwerden der Rohrleitung hervor. Darüber hinaus, wenn die geförderte Flüssigkeit verschiedene Einschlüsse (Harze, Paraffin, Salze usw.) hat, so dient der genannte Spalt als Ansammlungsstelle und ein Ablagerungskeim. Dadurch kommt teilweise und manchmal auch eine vollständige Absperrung des Querschnitts der Rohrleitung zustande. Gemäß der Erfindung kann die genannte Muffenverbindung durch ein Dichtelement sichergestellt werden, welches aus der beanspruchten Polymerzubereitung gefertigt wird. Das ermöglicht es, die oben genannten ungünstigen Prozesse in der Muffenverbindung zu vermeiden. Darüber hinaus sorgt das gleiche für eine Schutzschicht des Metallrohrs und für das Dichtelement in der Muffenverbindung verwendete Material für die gleichen Betriebseigenschaften und den gleichmäßigen Verschleiß über die gesamte Lebensdauer.

Das genannte Dichtelement muss in Form von einem Ring zum Mittelpunkt der Muffe zentriert ausgerichtet werden.

Um das genannte Dichtelement zu fertigen, werden vorher zwei Press-Werkzeuge (z.B. aus Fluorkohlenstoff) mit Gewinde vorbereitet. Ein Press-Werkzeug muss einen Stutzen für die Einfüllung der Polymerzubereitung und ein Ablassventil für die verdrängte Luft haben. Bei der Verschraubung mit der Muffe muss ein Spalt zwischen den Stirnflächen des Press-Werkzeuges gebildet werden, der dem Profil des Dichtelements entspricht.

Die Polymerzubereitung wird nach dem Verfahren aus Beispiel 2 hergestellt. Danach wird sie durch den Einfüllstutzen eingefüllt, bis der Spalt zwischen den Press-Werkzeugen ausgefüllt ist. Die Polymerisation wird unter den gleichen Bedingungen wie im Beispiel 2 gefahren. Nach der Polymerisation der Polymerzubereitung werden die Press-Werkzeuge abgeschraubt. Somit ist die Muffe mit dem Dichtelement fertiggestellt.

Eine weitere Ausgestaltung und Anwendungsmöglichkeit der Polymerzubereitung ist die Fertigung einer Zentriervorrichtung für ein Pumpgestänge und einer Zentriervorrichtung für ein Steigrohr. Aufgrund hoher Verschleißfestigkeit der beanspruchten Polymerzubereitung scheint die Fertigung von Zentriervorrichtungen aus diesem Material sehr nutzvoll zu sein.

Die Zentriervorrichtung des Pumpgestänges dient dafür, den Pumpgestängestrang zum Förderstrang in schräggerichteten Erdöl- und Gasbohrungen auszurichten. Darüber hinaus schützt die Zentriervorrichtung des Pumpgestänges den Pumpgestängestrang und den Förderstrang vor dem gegenseitigen Abrieb bei Hin- und Herbewegung des Pumpgestängestranges. Außerdem wirkt die Zentriervorrichtung als ein Molch, der Salz- und Harzablagerungen von der Innenfläche des Förderstranges bei einer Hin- und Herbewegung des Pumpgestängestranges entfernt. Normalerweise werden bis zu 10 Zentriervorrichtungen pro Gestänge befestigt.

Die Zentriervorrichtung des Steigrohres dient dafür, den Förderstrang zur Rohrtour (casing string) zu zentrieren. Außerdem ist sie dafür bestimmt, das Leistungskabel der Pumpenanlage (bzw. das Kabel der seileinbaubaren Geräte) zu fixieren und gegen Beschädigungen bei Ein- und Ausbauarbeiten zu schützen. Normalerweise werden bis zu 20 Zentriervorrichtungen pro Rohr befestigt.

Der Fertigungsvorgang der Zentriervorrichtungen ist sehr einfach. Zuerst müssen trennbare Press-Werkzeuge (z.B. aus einem Silikon- oder Fluorkunststoff) vorbereitet werden. Der Innenraum der genannten Press-Werkzeuge muss im zusammengebauten Zustand der Geometrie der Zentriervorrichtung entsprechen, und im Falle von Einlegestücken solche Einlegestücke enthalten. Die Press-Werkzeuge müssen mit einem Einfüllstutzen für die Polymerzubereitung sowie mit einem Ablaßventil für die verdrängbare Luft versehen werden.

Die Polymerzubereitung wird ebenfalls nach dem im Beispiel 2 beschriebenen Verfahren vorbereitet.

Die genannten Press-Werkzeuge werden in erforderlicher Menge am Körper des Pumpgestänges, an der Außenfläche des Steigrohres befestigt. Danach wird die Polymerzubereitung über den Stutzen in jedes Press-Werkzeug eingefüllt. Die Polymerisation wird unter den im Beispiel 2 beschriebenen Bedingungen gefahren. Nach Abschluß der Polymerisation werden die Press-Werkzeuge entfernt. Somit werden Zentriervorrichtungen an Pumpgestängen und/oder den Fördersträngen gefertigt.

Bei der Beschreibung der Ausgestaltungen und der Anwendungsbeispiele der Polymerzubereitung sowie der Fertigungsabläufe der Erzeugnisse aus Polymerzubereitung haben die Erfinder manche verfahrenstechnische Routinenschritte ausgelassen, die ausgeführt werden müssen, jedoch den Fachleuten auf diesem technischen Gebiet gut bekannt sind und keiner Beschreibung bedürfen unabhängig davon, welche spezifische Anforderungen an die Erledigung solcher Verfahrensschritte gestellt werden. Diese Verfahrensschritte umfassen: Oberflächenvorbereitung, Entfettung / Entölung, Entzunderung, Entrostung; nachfolgende Endbearbeitung - Entgratung, Abkanten; Qualitätskontrolle.

Es sei auch bemerkt, dass die beschriebenen Ausgestaltungen und Anwendungsmöglichkeiten der Polymerzubereitung hiermit nicht erschöpft sind. Dem Fachmann wird es klar sein, dass auch andere Ausgestaltungen realisiert werden können, ohne über den Rahmen der Erfindung hinauszugehen. Z.B. beschreibt die Anmeldung Erzeugnisse für die Erdöl- und Gasindustrie, während die Anwendung der Polymerzubereitung auch in anderen Branchen nutzvoll sein kann, z.B. im Schiffbau (Schutzschicht für Bauteile und Schiffsrümpfe), im chemische Maschinenbau (Schutzschichten für Rohrleitungen, um aggressive Medien zu befördern), im Maschinenbau für Grubenbergbau (Bauteile und Baugruppen von Transportsystemen) und vieles andere.

## Patentansprüche

1. Polymerzubereitung mit einem Polysulfidoligomer, Epoxidharz und einem Härter,
**dadurch gekennzeichnet,**
**dass** sie zusätzlich ein Urethanoligomer, Manganoxid, N,N-Diphenylguanidin, ein Antioxidans, einen Füllstoff mit folgendem Mengenverhältnis (anteilmäßig) enthält:
| | |
|---|---|
| Urethanoligomer | 60 - 90, |
| Polysulfidoligomer | 5 - 30, |
| Härter | 7 - 35, |
| Manganoxid | 3 - 20, |
| Epoxidharz | 0,1 - 30, |
| N,N-Diphenylguanidin | 0,05 - 1, |
| Antioxidans | 0,05 - 5, |
| Füllstoff | 70 - 120 |

2. Polymerzubereitung nach Anspruch 1,
**dadurch gekennzeichnet,**
**dass** als Härter 4,4'-Methylen-bis-(2-Chloranilin) verwendet wird.

3. Polymerzubereitung nach Anspruch 1,
**dadurch gekennzeichnet,**
**dass** als Epoxidharz Dian-Epoxidharz mit einem Massenanteil von Epoxidgruppen zwischen 16 und 23 % verwendet wird.

4. Polymerzubereitung nach Anspruch 1,
**dadurch gekennzeichnet,**
**dass** als Füllstoff ein Material verwendet wird, das aus folgender Reihe gewählt wird: Diabasmehl, Diatomeeneerde, Dolomit, Glasfaser, Ruß.

5. Metallrohr mit einer Schutzschicht, die aus einer Polymerzubereitung nach einem der Ansprüche 1 bis 4 gefertigt wird.

6. Muffe mit einem Dichtelement, welches aus einer Polymerzubereitung nach einem der Ansprüche 1 bis 4 gefertigt wird.

7. Zentriervorrichtung aus einer Polymerzubereitung nach einem der Ansprüche 1 bis 4.

8. Metallrohr mit einer Schutzschicht nach Anspruch 5,
**dadurch gekennzeichnet,**
**dass** ein Stempel in das Metallrohr eingefahren wird, so dass zwischen dem Metallrohr und dem Stempel ein Ringraum entsteht,
**dass** der vorher mit einem Antihaftmittel bestrichene Stempel mittels Verschluss am Ende des Metallrohrs befestigt und im Metallrohr zentriert wird, dass ein anderer Verschluss ein Ablassventil zum Ablassen der Überschussluft aufweist,
**dass** danach die Polymerzubereitung über den Einfüllstutzen eingefüllt wird, bis der Ringraum voll ist und
**dass** dann die Verschlüsse entfernt werden und der Stempel herausgefahren wird.

9. Muffe mit einem Dichtelement nach Anspruch 6,
**dadurch gekennzeichnet,**
**dass** ein Press-Werkzeug einen Stutzen und ein Ablassventil für die verdrängte Luft aufweist,
**dass** bei der Verschraubung mit der Muffe ein Spalt zwischen den Stirnflächen des Press-Werkzeugs gebildet wird, der dem Profil des Dichtelements entspricht und
**dass** danach Polymerzubereitung durch den Einfüllstutzen eingefüllt wird, bis der Spalt zwischen den Press-Werkzeugen ausgefüllt ist und die Press-Werkzeuge dann abgeschraubt werden.

10. Zentriervorrichtung nach Anspruch 7,
**dadurch gekennzeichnet,**
**dass** trennbare Press-Werkzeuge im zusammengebauten Zustand der Geometrie der Zentriereinrichtung entsprechen,
**dass** die Press-Werkzeuge mit einem Einfüllstutzen und einem Ablassventil für Luft versehen werden,
**dass** die Press-Werkzeuge an der Außenseite des Steigrohrs befestigt werden und danach Polymerzubereitung über den Stutzen in jedes Press-Werkzeug eingefüllt wird und
**dass** nach der Polymerisation die Press-Werkzeuge von dem Steigrohr entfernt werden.
